# EUROPEAN PATENT APPLICATION

(11) **EP 2 085 142 A1**
(43) Date of publication of application: **05.08.2009**
(21) Application number: 07831454.9
(22) Date of filing: 08.11.2007
(51) Int. Cl.: B01J 35/02, C01G 23/053

(54) **METHOD FOR PRODUCING COATING AGENT EXHIBITING PHOTOCATALYTIC ACTIVITY AND COATING AGENT OBTAINED BY THE SAME**

(30) Priority: 10.11.2006 JP 2006305204
(71) Applicant: Yuka Collaboration Corporation, Kainan-shi Wakayama 642-0017 (JP)
(72) Inventor: KAWAI, Ryoue, Wakayama-shi Wakayama 640-8267 (JP); SHIMIZU, Masafumi, Kainan-shi Wakayama 642-0032 (JP); MAEKUBO, Ryuji, Kinokawa-shi Wakayama 649-6531 (JP)
(74) Representative: Eisenführ, Speiser & Partner
(86) International application number: PCT/JP2007/071723
(87) International publication number: WO 2008/056744

(57) **Abstract**

With respect to 100 parts by volume of an aqueous alcohol solution containing 0.01 to 50% by volume of an alcohol, 20 or less parts by volume of titanium tetrachloride is added thereto to obtain a coating agent wherein titanium oxide or a precursor thereof in the form of nanoparticles is dispersed in the aqueous alcohol solution. Consequently, the coating agent exhibiting a high photocatalytic activity can be produced by a simple operation at low cost. Since the coating agent obtained by the present invention has a high self-adhesiveness in addition to the high photocatalytic activity, it can adhere to an object substance by itself.

## Description

### Technical Field

The present invention relates to a method for producing a coating agent exhibiting a photocatalytic activity, and more particularly to a method for obtaining a coating agent (or a dispersion liquid) wherein titanium oxide (TiO₂ or a precursor thereof is dispersed in an aqueous medium by using titanium tetrachloride (TiCl₄). The present invention also relates to a coating agent obtained by such method.

### Background Art

Titanium oxide has been used for wide variety of applications such as white pigment, and recently its application as a photocatalyst is expanded. Generally, titanium oxide is in the form of particles or powder, and for the purpose of a higher photocatalytic activity, it is required to increase its specific surface area, and therefore, to decrease its particle size.

Heretofore, titanium oxide is produced in an industrial and practical process by a sulfuric acid method or a chlorine method. Also, it is well known that titanium oxide is obtained by precipitating titanium hydroxide (or hydrous titanium oxide) from a titanium salt solution and calcining the precipitation at a high temperature (for example, 800 to 1100°C under ordinary pressure). The actual situation is that since titanium oxide obtained by these methods is a relatively large crystal, this is crushed in order to obtain nanometer-sized particles (hereinafter referred to as a crushing method).

Patent Citation 1: Japanese Patent Laid-open Publication (Kokai) No. 2004-131366
Patent Citation 2: Japanese Patent Laid-open Publication (Kokai) No. 2005-272244
Patent Citation 3: Japanese Patent Laid-open Publication (Kokai) No. 2002-308712

### Disclosure of Invention

### Technical Problem

However, the crushing method as described above takes lot of labor since titanium oxide is once produced as a relatively large crystal and then crushed into a nanometer size. Besides, nanoparticles obtained by the crushing method are limited in size, and also its particle size distribution is broad. Further, thus obtained nanoparticles have a poor adhesiveness to an object substance (substance or base material on which the particles are to be fixed, e.g. fibrous products), and are readily removed off, for example, by cleaning operation (liquid washing such as laundry). Thus, it is necessary to use a binder or the like to make the nanoparticles adhere to an object substance.

Now, in order to increase a photocatalytic activity, nanometer-sizing technique of titanium oxide particles becomes an active area of research and development (for example, see Patent Citations 1 and 2). However, all of those methods require complex operations and a high cost of production, so that those are not necessarily sufficient for practical application. In addition, there is an increasing demand for a coating agent which is able to make a photocatalyst adhere to an object substance without use of a binder or the like.

The present invention aims to provide a method which can produce a coating agent exhibiting a high photocatalytic activity by a simple operation at low cost.

### Technical Solution

There has been proposed that titanium tetrachloride is reacted with water or alcohol or a mixed solution thereof and then further reacted with phosphoric acid to obtain a dispersion liquid of a titanium phosphate compound (see Patent Citation 3). The present inventors replicated and examined that technique, made studious efforts, and finally completed the present invention.

According to one aspect of the present invention, there is provided a method for producing a coating agent exhibiting a photocatalytic activity, which comprises adding about 20 or less parts by volume (from 0 to about 20 parts by volume, excluding zero, which is also applied hereinafter) of titanium tetrachloride with respect to 100 parts by volume of an aqueous alcohol solution containing about 0.01 to 50% by volume of an alcohol to obtain a coating agent (or a dispersion liquid) wherein titanium oxide or a precursor thereof in the form of nanoparticles is dispersed in the aqueous alcohol solution.

In the present invention, "titanium oxide" means titanium dioxide (TiO₂) substantially, and a "precursor" of the nanoparticles means a substance(s) which can change into titanium oxide by just drying after the coating agent is applied to an object substance. "Nanoparticles" mean a particulate material having an average particle size less than 1 µm, and an "average particle size" is a 50% size (or a cumulative median diameter or a median diameter) measured by a method of dynamic light scattering with use of Nanotrac Particle Size Analyzer UPA-EX150 (Nikkiso Co., Ltd.). Further in the present invention, "% by volume" and "parts by volume" mean a ratio and an amount in volume at standard condition (25°C, 0.1 MPa).

In a conventional crushing method and methods described in Patent Citations 1 and 2, a titanium compound is once obtained in the form of precipitation and then nanoparticles of titanium oxide is obtained. In a method described in Patent Citation 3, titanium tetrachloride is reacted with water or alcohol or a mixed solution thereof and then further reacted with phosphoric acid essentially to obtain a substance referred to as a titanium phosphate based compound. In contrast, the present inventors have uniquely found that a dispersion liquid of nanoparticles of titanium oxide or precursor thereof may be obtained by just adding titanium tetrachloride to an aqueous alcohol solution. Also, the present inventors have further found that whether nanoparticles of titanium oxide can be obtained or not depends on an alcohol content of the used aqueous alcohol solution and on an amount of titanium tetrachloride to be added thereto, and finally completed the present invention described above.

According to the present invention described above, a dispersion liquid of nanoparticles of titanium oxide or precursor thereof can be obtained by just adding titanium tetrachloride to an aqueous alcohol solution at the prescribed conditions. Such operation is simple, and the cost thereof is low since complex operations or apparatuses are not required. Furthermore, according to the present invention, since an alcohol content of the used aqueous alcohol solution and an added amount of titanium tetrachloride are appropriately selected, thus obtained coating agent comprises nanoparticles of titanium oxide, or when it comprises nanoparticles of precursor of titanium oxide, these can be changed into nanoparticles of titanium oxide by just drying. The nanoparticles of titanium oxide obtained from the coating agent are of anatase type, and have a very high photocatalytic activity. In addition, the nanoparticles of titanium oxide show a high adhesiveness by themselves (also referred to as self-adhesiveness).

An alcohol content of an aqueous alcohol solution used in a producing method of the present invention is about 0.01 to 50% by volume, for example not less than about 0.01% by volume but not more than about 40% by volume, preferably not more than about 25% by volume, and more preferably not more than about 15% by volume. An added amount of titanium tetrachloride in a producing method of the present invention is not more than 20 parts by volume, for example about 0.01 to 15 parts by volume with respect to 100 parts by volume of an aqueous alcohol solution.

An alcohol used for a producing method of the present invention is not limited as long as it is soluble in water and can form an aqueous alcohol solution, but preferably at least one selected from the group consisting of mono- or poly-alcohols having a carbon number of 1 to 4 and sugar alcohols.

In one embodiment of a producing method of the present invention, after or before the addition of titanium tetrachloride to the aqueous alcohol solution, 3 or less parts by volume (from 0 to about 3 parts by volume, excluding zero, which is also applied hereinafter) of silicate soda is added with respect to 100 parts by volume of the aqueous alcohol solution. Silicate soda functions as a stabilizing agent, so that it can effectively avoid nanoparticles from agglomerating and decrease the particle size of nanoparticles.

In a preferred embodiment of a producing method of the present invention, a coating agent is transparent and colorless. A coating agent which is transparent and colorless can be used for wide variety of applications in comparison with a coating agent having a color such as white.

According to another aspect of the present invention, there is also provided a coating agent exhibiting a photocatalytic activity which is obtained by a producing method of the present invention described above.

An average particle size of nanoparticles contained in a coating agent of the present invention may be preferably in a range from about 1 to 100 nm, and further may be in a range from about 1 to 10 nm.

A particle size distribution of nanoparticles contained in a coating agent of the present invention may be preferably not more than 200 nm as an upper limit, and further may be from about 3 to 15 nm.

On using a coating agent of the present invention, it can be applied on an object substance as it is, or being diluted with an appropriate solvent followed by, and then subjected to drying (during which, in a case of precursor of titanium oxide, it is changed into titanium oxide), so that nanoparticles of titanium oxide can adhere to the object substance.

In a case of using conventional titanium oxide particles as a photocatalyst, due to a very low self-adhesiveness, those are readily removed from an object substance by, for example, cleaning operation, and therefore it has been necessary to use a binder such as silicone based or organic binders to fix them on the object substance. Thus, the titanium oxide particles exert a function only at their exposed part from the binder surface, so that the advantageous effect of the titanium oxide particles is diminished. In the long term, the binder itself is decomposed by a photocatalytic effect of the titanium oxide particles, the titanium oxide particles as well as the binder are detached from the object substance occasionally. In addition, the exposed part of the titanium oxide particles is sensed as a rough surface, so that an object being applied is limited to applications wherein such rough surface is acceptable. Further, since the titanium oxide particles scatter visible light and show white color, the titanium oxide particles harm a color of the object substance, and are not used for aesthetic purposes, especially for the object substance which is transparent or shiny.

In contrast, a coating agent of the present invention has many advantages. Since nanoparticles of titanium oxide contained in this dispersion liquid have a high self-adhesiveness as described above, the nanoparticles can be fixed on an object substance without use of a binder, and are not readily removed off even when subjected to cleaning operation. Since a binder is not required, the nanoparticles can exert its activity highly and show a stable adhesiveness for a long term. When a sugar alcohol is used, the sugar alcohol as well as the nanoparticles of titanium oxide remains on the object substance and may contribute to a higher adhesiveness. In addition, these titanium oxide nanoparticles are small enough not to be sensed as rough surface, thus a quite smooth surface to the touch can be obtained. Further, these nanoparticles are preferably transparent and colorless, and therefore do not harm a color of the object substance. Thus, these nanoparticles can be applied in the form of the coating agent for wide variety of object substances.

### Advantageous Effects

According to the present invention, a coating agent exhibiting a high photocatalytic activity can be produced by a simple operation at low cost. Further, a coating agent obtained by the present invention has a high self-adhesiveness in addition to the high photocatalytic activity, so that it can adhere to an object substance by itself.

### Brief Description of Drawings

Fig. 1 is a sheet showing a result of X-ray diffraction analysis of a dispersion liquid Sample 1 obtained in Example 1 of the present invention.
Fig. 2a is an electron microscope photograph (Magnification: 30,000x) of the dispersion liquid Sample 1 obtained in Example 1 of the present invention.
Fig. 2b is another electron microscope photograph (Magnification: 30,000x) of the dispersion liquid Sample 1 obtained in Example 1 of the present invention.
Fig. 2c is another electron microscope photograph (Magnification: 50,000x) of the dispersion liquid Sample 1 obtained in Example 1 of the present invention.
Figs. 3 (a) and (b) are graphs showing Frequency (%) (left vertical axis: black-colored bar graph) and Cumulation (%) (right vertical axis: curved graph) of dispersion liquid Samples 2a and 2b respectively, obtained in Example 2 of the present invention.
Fig. 4 shows overlapped graphs of Figs. 3 (a) and (b) (except that Frequency (%) is shown as polygonal lines).
Fig. 5a is an electron microscope photograph (Magnification: 500,000x) of a dispersion liquid Sample 2a obtained in Example 2 of the present invention.
Fig. 5b is another electron microscope photograph (Magnification: 1500,000x) of the dispersion liquid Sample 2a obtained in Example 2 of the present invention.
Fig. 6a is an electron microscope photograph (Magnification: 300,000x) of a dispersion liquid Sample 2b obtained in Example 2 of the present invention.
Fig. 6b is another electron microscope photograph (Magnification: 1500,000x) of the dispersion liquid Sample 2b obtained in Example 2 of the present invention.

### Best Mode for Carrying Out the Invention

Hereinafter, two embodiments of the present invention are described in detail.

### (Embodiment 1)

Firstly, an aqueous alcohol solution is prepared. An alcohol is not limited as long as it is soluble in water and can form an aqueous alcohol solution, but preferably at least one selected from the group consisting of mono- or poly-alcohols having a carbon number of 1 to 4 and sugar alcohols. Examples of mono- or poly-alcohols having a carbon number of 1 to 4 include methyl alcohol, ethyl alcohol, isopropyl alcohol, propylene glycol. Examples of sugar alcohols include glycerin. An alcohol content in the aqueous solution is about 0.01 to 50% by volume, which will be described in more detail below.

Next, titanium tetrachloride is added to the aqueous alcohol solution. An added amount of titanium tetrachloride to the aqueous alcohol solution is not more than 20 parts by volume with respect to 100 parts by volume of the aqueous alcohol solution, which will be described in more detail below. The addition of titanium tetrachloride to the aqueous alcohol solution can be conducted by dropping titanium tetrachloride slowly while stirring the aqueous alcohol solution. Although a temperature and a pressure at this step are not specifically limited, a reaction temperature is, for example, not more than 60°C, and generally not more than 45°C, and a reaction pressure may be an ordinary pressure for a reason of convenience. A surrounding atmosphere during the addition may be appropriately selected so as to avoid a danger that titanium tetrachloride as a raw material reacts with moisture existing in a surrounding atmosphere by hydrolysis to generate white smoke of hydrogen chloride. For example, the addition of titanium tetrachloride to the aqueous alcohol solution may be conducted under an atmosphere having a relative humidity of about 60% or less, or may be conducted in a draft chamber, or may be conducted under an inactive atmosphere which does not contain moisture.

After the addition, the liquid mixture is preferably transparent and colorless. This is realized by that nanoparticles of titanium oxide are sufficiently small and sufficiently dispersed in the aqueous alcohol solution as a disperse medium. Typically, the state of titanium in an aqueous alcohol solution can be determined based on a color tone of this solution. Possible titanium species which may generate when titanium tetrachloride is added to an aqueous alcohol solution are titanium oxide, titanium hydroxide, hydrous titanium oxide, titanium hydroxide chloride, titanium alkoxide, titanium ion and so on. Among them, major products are titanium oxide, titanium hydroxide, hydrous titanium oxide and titanium hydroxide chloride; titanium hydroxide and hydrous titanium oxide exhibit white color and titanium hydroxide chloride exhibits straw color (or light yellow color). As to titanium oxide, when its particle size (comprising an apparent particle size for a case of agglomeration) becomes large, it makes the solution white turbid. Conventionally, it is well known that titanium oxide powder exhibits white color. However, titanium oxide particles in a nanometer size (especially a size having an average particle size 100 nm or less) show a very weak effect of scattering visible light, thus being colorless, and the existence of nanoparticles of titanium oxide in the liquid can not be observed by naked eyes. Among the major products, what can maintain the liquid as transparent and colorless while existing is only the sufficiently dispersed nanoparticles of titanium oxide. Therefore, after the addition of titanium tetrachloride to an aqueous alcohol solution, when a color tone of the solution is transparent and colorless, it can be conveniently understood that substantially all of the added titanium source is converted into nanoparticles of titanium oxide to realize a very high yield, preferably a yield close to 100%.

Thus, it is preferable to appropriately set conditions for conducting the present invention so that the liquid mixture after the addition is transparent and colorless.

From the point of view described above, an alcohol content in the aqueous alcohol solution is appropriately set within a range from about 0.01 to 50% by volume. If an alcohol content is less than bout 0.01% by volume, a reaction between titanium tetrachloride and water proceeds notably to generate particles larger than a nanometer size, and in appearance, the solution becomes white turbid and is likely to precipitate. On the other hand, if an alcohol content is more than about 50% by volume, a titanium compound(s) excepting titanium oxide, for example, titanium hydroxide is remarkably generated, and in appearance, the solution becomes white turbid and is likely to precipitate. A preferable alcohol content of the aqueous alcohol solution may be variable depending on the used alcohol (such as carbon number and valence of the alcohol) and adding conditions. The alcohol content is, for example, about not less than 0.01% by volume but not more than about 40% by volume, preferably not more than about 25% by volume, and more preferably not more than about 15% by volume.

Also from the similar point of view, the added amount of titanium tetrachloride to the aqueous alcohol solution is appropriately selected in a range less than about 20 parts by volume with respect to 100 parts by volume of the aqueous alcohol solution. The added amount of titanium tetrachloride has no particular lower limit. On the other hand, if an added amount is larger than about 20 parts by volume with respect to 100 parts by volume of the aqueous alcohol solution, titanium source is supplied excessively, nanoparticles existing in the disperse medium agglomerate to form aggregate and bring about a larger apparent particle size, and in appearance, the solution becomes turbid in a color from white to straw and is likely to precipitate. A preferable added amount of titanium tetrachloride to the aqueous alcohol solution may be variable depending on the used aqueous alcohol solution (such as carbon number and valence of the alcohol, the alcohol content thereof) and adding conditions. The added amount of titanium tetrachloride is, for example, about 0.01 to 15 parts by volume with respect to 100 parts by volume of the aqueous alcohol solution.

It shall be noted that a boundary value at which the liquid mixture becomes white turbid may also depend on the kind of the used alcohol and many other conditions.

As described above, the dispersion liquid wherein titanium oxide or precursor thereof in the form of nanoparticles is dispersed in the aqueous alcohol solution is obtained as a coating agent of the present embodiment. According to the producing method of the present embodiment, the dispersion liquid of nanoparticles of titanium oxide or precursor thereof can be obtained by just adding titanium tetrachloride to the aqueous alcohol solution at the prescribed conditions. Such operation is simple, and the cost thereof is since complex operations or apparatuses are not required. This producing method can be conducted either in a batch or continuous manner.

The present inventors have confirmed that nanoparticles of some sort exist in thus obtained dispersion liquid by a method of dynamic light scattering, and have confirmed that these nanoparticles are composed of titanium oxide or a substance which will change into titanium oxide by X-ray diffraction analysis.

Although the present invention is not bound to any theory, effects can be conceived as follows. As it is generally known, titanium tetrachloride reacts with water notably to generate titanium oxide and hydrogen chloride. In contrast, the use of an aqueous alcohol solution makes alcohol exist in a reaction system, the reaction between titanium tetrachloride and water is inhibited or alleviated by the alcohol so that titanium oxide or precursor thereof is generated in a condition where a micro-scale reaction system is divided locally. As a result, particles of the generated titanium oxide or precursor thereof are inhibited from growing larger or growing together, so that the particles remain in a nanometer size.

According to this producing method, although it depends on concrete conditions, an average particle size can be made smaller than that obtained by a crushing method. The average particle size of nanoparticles contained in thus obtained dispersion liquid may be preferably in a range from about 1 to 100 nm, further may be in a range from about 1 to 10 nm. The particle size distribution of nanoparticles contained in thus obtained dispersion liquid may be preferably not more than 200 nm as an upper limit, and further may be from about 3 to 15 nm.

It is noted that nanoparticles existing in thus obtained dispersion liquid may include other particles of titanium oxide, titanium hydroxide, hydrous titanium oxide, titanium hydroxide chloride, titanium alkoxide and so on, than titanium oxide particles.

Thus obtained dispersion liquid as a coating agent can be used as it is or being diluted with an appropriate solvent, such that nanoparticles of titanium oxide as a photocatalyst (or a functional material for other purpose) adhere to an object substance. As a diluent solvent, a stabilizing agent such as silicate soda can be used, or other appropriate solvent such as water, alcohol, an aqueous alcohol solution and an aqueous silicate soda solution can be used. When the used aqueous alcohol solution is composed of alcohol and water, thus obtained dispersion liquid shows a strong acidity as it is (e.g. pH of about 1 to 2), but the pH value in the liquid finally obtained can be adjusted by appropriately selecting the diluent solvent.

The dispersion liquid (comprising the liquid after dilution, when diluted) can be applied to the object substance by any appropriate method such as spraying, coating, dipping (or immersion), and then dried to remove the disperse medium (liquid). The drying can be conducted at, for example, about 5 to 60°C, and natural drying or reduced-pressure drying may be used. Thus, nanoparticles of titanium oxide remain on and adhere to the object substance.

What substances the nanoparticles existing in the dispersion liquid obtained above are composed of, and what structure the nanoparticles have are not fully elucidated. However, the fact that nanoparticles obtained after drying the dispersion liquid (the coating agent) are composed of titanium oxide and of anatase type has been confirmed through various experiments by the present inventors (for example, X-ray diffraction analysis in examples described below, and also Raman spectrophotometry, methylene blue decoloration test and so on).

Since the particles of titanium oxide derived from the coating agent are in a nanometer size and of anatase type, these particles have a very high photocatalytic activity and thus can provide the object substance with functions derived from a photocatalytic effect such as antibacterial activity, bactericidal activity, (decomposing) deodorizing property, antifouling property, and antifogging property. In addition, since the nanoparticles of titanium oxide show a high adhesiveness by themselves (also referred to as self-adhesiveness), the nanoparticles can be fixed on the object substance by themselves, and are not readily removed off even when subjected to cleaning operation. If applied to a fibrous product as the object substance, they are not readily removed off by cleaning operation (liquid washing such as laundry), and can exert the effect for a long time. In addition, the nanoparticles of titanium oxide can not be sensed as a rough surface, so that a quite smooth surface to the touch can be obtained. Further, since the transparent and colorless coating agent does not harm a color of the object substance, it can be applied for wide variety of object substances.

### (Embodiment 2)

The present embodiment is a modification of Embodiment 1, and similar to Embodiment 1 unless otherwise specified.

After titanium tetrachloride is added to an aqueous alcohol solution, silicate soda is added to thus obtained liquid mixture (dispersion liquid). An added amount of silicate soda is not more than about 3 parts by volume (from 0 to about 3 parts by volume, excluding zero, which is also applied hereinafter) with respect to 100 parts by volume of the initial aqueous alcohol solution before the addition of silicate soda.

As described above, the dispersion liquid wherein titanium oxide or precursor thereof in the form of nanoparticles is dispersed in the aqueous alcohol solution is obtained as a coating agent of the present embodiment. Silicate soda functions as a stabilizing agent, can effectively avoid the nanoparticles from agglomerating and can decrease the particle size of the nanoparticles.

Alternatively, before titanium tetrachloride is added to an aqueous alcohol solution, silicate soda may be added to the aqueous alcohol solution. An added amount of silicate soda is, similar to the above, not more than about 3 parts by volume (from 0 to about 3 parts by volume, excluding zero, which is also applied hereinafter) with respect to 100 parts by volume of the aqueous alcohol solution. In this case, the aqueous alcohol solution comprising silicate soda may be prepared by any method; either an aqueous alcohol solution may be prepared followed by adding silicate soda thereto; or silicate soda may be added to water followed by adding an alcohol thereto. Since silicate soda does not adversely effect on the formation of the nanoparticles even when silicate soda exists in the reaction system of titanium tetrachloride with water, similar advantageous effects described above can be obtained.

Furthermore, both of after and before titanium tetrachloride is added to an aqueous alcohol solution, silicate soda may be added.

Although silicate soda is used in the present embodiment, it is also possible to use any other appropriate stabilizing agent such as silicate calcium or calcium hydroxide, accordingly.

The two embodiments of the present invention are described above, but the present invention is not limited to these embodiments. The elements of the present invention may be substituted with equivalents. For example, although titanium tetrachloride is used as a titanium source in the present invention, it may be possible to use other titanium source such as titanium ammonium oxalate (n-hydrate), titanium boride (for example, an average particles size of about 1 to 2 µm) Further, the coating agent obtained by the present invention may be used not only for coating an object substance, but also for other various applications of a photocatalyst.

### Example 1

An aqueous alcohol solution containing 15% by volume of an alcohol in water was prepared. The used alcohol was isopropyl alcohol (hereinafter abbreviated as IPA) (Kishida Chemical Co., Ltd., nominal content 99%), the used water was ion-exchanged water.
With respect to 100 parts by volume of this aqueous alcohol solution, 5 parts by volume of titanium tetrachloride (Kishida Chemical Co., Ltd., nominal content 99%) was added thereto mechanically and slowly. The surrounding atmosphere was open to the atmosphere under atmospheric pressure at an atmosphere temperature of about 28°C and a relative humidity of about 65%. During titanium tetrachloride was dropped, the aqueous alcohol solution was stirred and mixed by an electric stirrer (rotation speed 750 rpm). The temperature of the reaction solution was about 35 to 45°C.
With respect to 100 parts by volume of the initial aqueous alcohol solution, 0.5 parts by volume of silicate soda (3Na₂O·nSiO₂·mH₂O, Fuji Chemical Industry Co., Ltd., No.3 (specific gravity 1.39; Na₂O 9.0 to 10.0% by weight; SiO₂ 28.0 to 30.0% by weight)) was added to the above obtained liquid. From thus obtained liquid, Sample 1 was taken.
This Sample 1 was transparent and colorless.

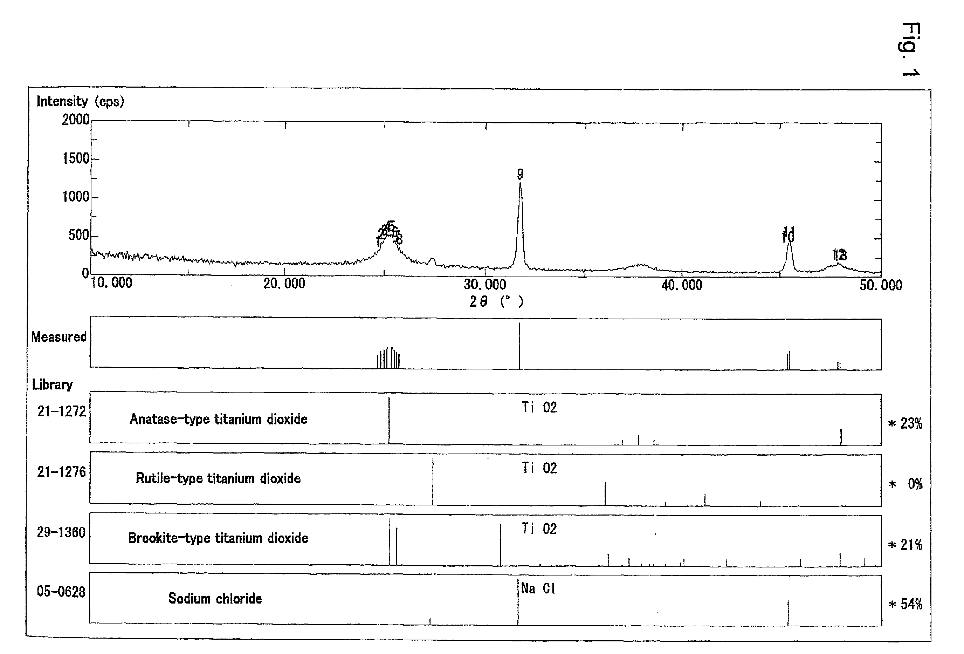

The Sample 1 was subjected to X-ray diffraction analysis. As the X-ray diffraction analysis apparatus, MiniFlex (Rigaku Corporation) was used. The analysis was conducted for a solid which was obtained by heating the Sample 1 in an oven to remove the solvent medium and drying in a vacuum oven (upper limit O heating 320°C). Results are shown in Fig. 1 (below the measured peaks in Fig. 1, library (or references) of peaks for Anatase-type titanium dioxide, Rutile-type titanium dioxide, Brookite-type titanium dioxide, Sodium chloride is shown). As understood from Fig. 1, anatase-type titanium dioxide and sodium chloride were detected. Thus, it was confirmed that anatase-type titanium dioxide or precursor thereof was contained in the Sample 1.

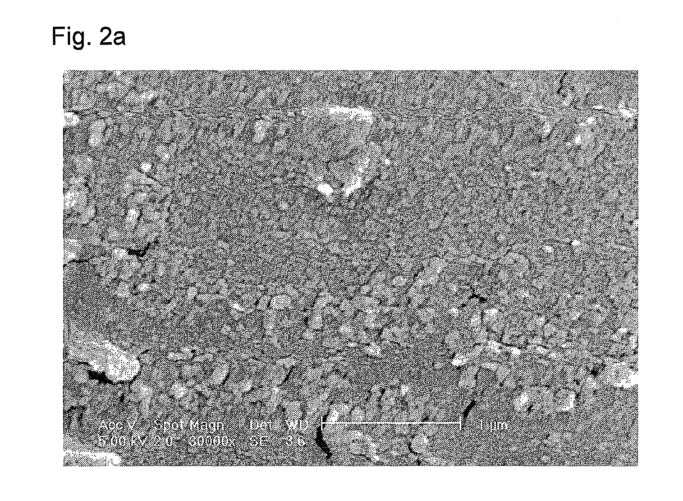

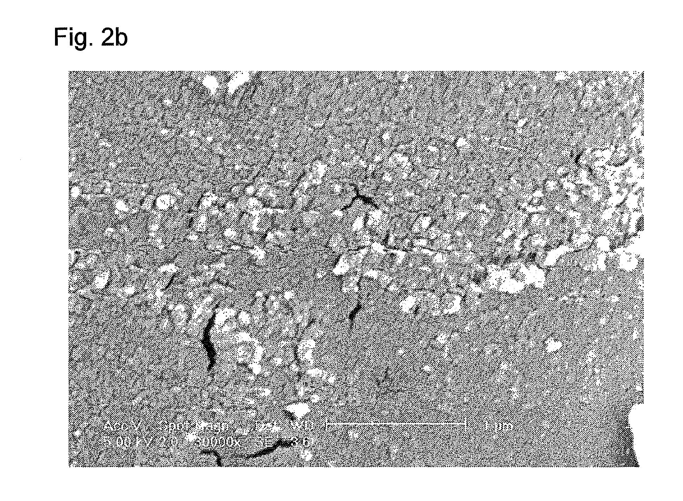

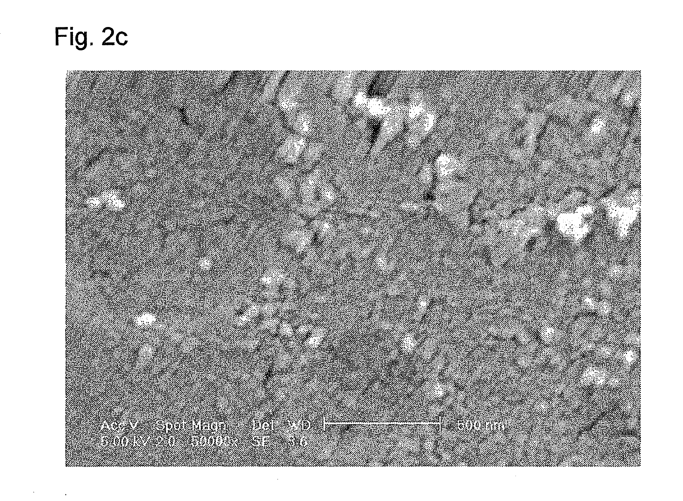

In addition, as to the Sample 1, electron microscope photographs were taken in a dry state. As the electron microscope, Field Emission Scanning Electron Microscopy (FE-SEM) XL30 (Philips) was used with an accelerating voltage of 5 kV, and the samples were applied to a glass plate and naturally dried to be observed. Results are shown in Figs. 2a to 2c. Figs. 2a to 2c show electron microscope photographs of the Sample 1, Figs. 2a and 2b being taken at 30,000-fold magnification, and Fig. 2c being taken at 50,000-fold magnification. From Figs. 2a to 2c, it was confirmed that nanoparticles were dispersed in the Sample 1.

Comprehensively evaluating these results, it was confirmed that nanoparticles of anatase-type titanium dioxide or precursor thereof were dispersed in the Sample 1.

### Example 2

An aqueous alcohol solution containing 35% by volume of IPA as an alcohol in water was prepared. With respect to 100 parts by volume of this aqueous alcohol solution, 5 parts by volume of titanium tetrachloride was added thereto mechanically and slowly.
From the liquid obtained by the above operations, Sample 2a was taken.
In addition, with respect to 100 parts by volume of the liquid obtained above, 0.5 parts by volume of silicate sodium was added thereto and stirred. From thus obtained liquid, Sample 2b was taken.
The Sample 2a was slightly white turbid, the Sample 2b was transparent and colorless.
The materials, conditions and so on in the present example were similar to Example 1 unless otherwise specified.

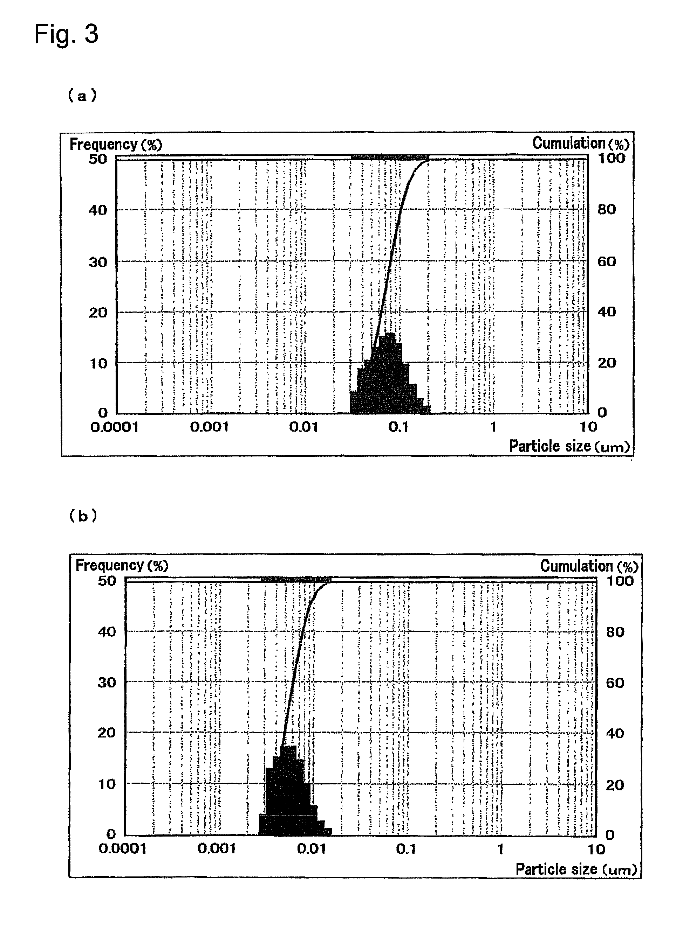

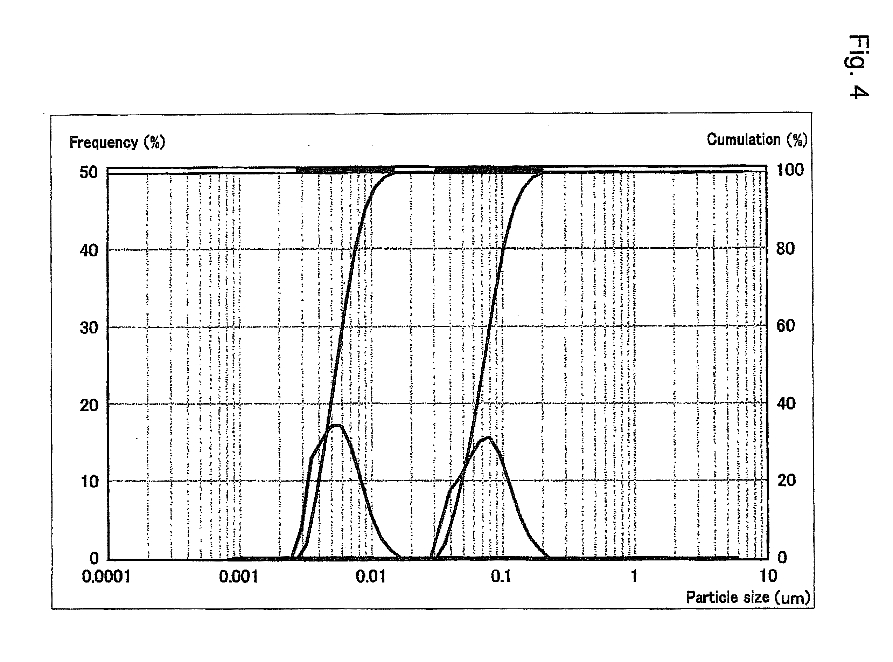

As to the Samples 2a and 2b, their particle size distributions were measured by Nanotrac Particle Size Analyzer UPA-EX150 (Nikkiso Co., Ltd.). The measurement was conducted by directly feeding these samples to this apparatus, with a measuring time of 60 seconds, the lower limit of the measurement of 0.8 nm, the upper limit of the measurement of 6540.0 nm. Results are shown in Tables 1 to 3 and Figs. 3 to 4. Fig. 3 shows graphs corresponding to Table 1, Figs. 3 (a) and (b) are graphs showing Frequency (%) (left vertical axis: black-colored bar graph) and Cumulation (%) (right vertical axis: curved graph) of the Samples 2a and 2b respectively. Fig. 4 shows overlapped graphs of Figs. 3 (a) and (b) (except that Frequency (%) is shown as polygonal lines). All of the distributions are on the volumetric basis.

**Table 1**

| Sample 2a | | | Sample 2b | | |
|---|---|---|---|---|---|
| Particle size (nm) | Frequency (%) | Cumulation (%) | Particle size (nm) | Frequency (%) | Cumulation (%) |
| 6540.0 | 0.00 | 100.00 | 6540.0 | 0.00 | 100.00 |
| : | 0.00 | 100.00 | : | 0.00 | 100.00 |
| 243.0 | 0.00 | 100.00 | 18.1 | 0.00 | 100.00 |
| 204.4 | 1.21 | 100.00 | 15.2 | 1.03 | 100.00 |
| 171.9 | 2.78 | 98.79 | 12.8 | 2.58 | 98.97 |
| 144.5 | 5.65 | 96.01 | 10.7 | 5.60 | 96.39 |
| 121.5 | 9.69 | 90.36 | 9.0 | 10.01 | 90.79 |
| 102.2 | 13.62 | 80.67 | 7.6 | 14.52 | 80.78 |
| 85.9 | 15.66 | 67.05 | 6.4 | 17.21 | 66.26 |
| 72.3 | 15.12 | 51.39 | 5.4 | 17.16 | 49.05 |
| 60.8 | 12.92 | 36.27 | 4.5 | 15.13 | 31.89 |
| 51.1 | 10.46 | 23.35 | 3.8 | 12.91 | 16.76 |
| 43.0 | 8.75 | 12.89 | 3.2 | 3.85 | 3.85 |
| 36.1 | 4.14 | 4.14 | 2.7 | 0.00 | 0.00 |
| 30.4 | 0.00 | 0.00 | : | 0.00 | 0.00 |
| : | 0.00 | 0.00 | : | 0.00 | 0.00 |
| 1.0 | 0.00 | 0.00 | 1.0 | 0.00 | 0.00 |
| [0056] | | | | | |

**Table 2**

| | Sample 2a | Sample 2b |
|---|---|---|
| Cumulation (%) | Particle size (nm) | Particle size (nm) |
| 10 | 40.8 | 3.5 |
| 20 | 48.5 | 4.0 |
| 30 | 56.1 | 4.4 |
| 40 | 63.6 | 4.9 |
| 50 | 71.2 | 5.4 |
| 60 | 79.4 | 6.0 |
| 70 | 88.9 | 6.7 |
| 80 | 101.3 | 7.5 |
| 90 | 120.6 | 8.9 |
| 95 | 138.9 | 10.2 |

**Table 3**

| | Sample 2a | Sample 2b |
|---|---|---|
| MV (Mean Volume Diameter) (nm) | 76.9 | 5.9 |
| MN (Mean Number Diameter) (nm) | 49.9 | 4.3 |
| MA (Mean Area Diameter) (nm) | 65.5 | 5.2 |
| CS (Calculated Specific Surface Area) (m²/cc) | 91.6114 | 1154.31 |
| SD (Standard Deviation) (nm) | 31.1 | 2.1 |

As understood from Tables 1 and 2, the Sample 2a had a particle size distribution from about 30 to 200 nm and an average particle size (50% size) of 71.2 nm, and the Sample 2b had a particle size distribution from about 3 to 15 nm and an average particle size (50% size) of 5.4 nm. From Tables 1 to 3 and Figs. 3 and 4, it was confirmed that nanoparticles were dispersed in the Samples 2a and 2b.

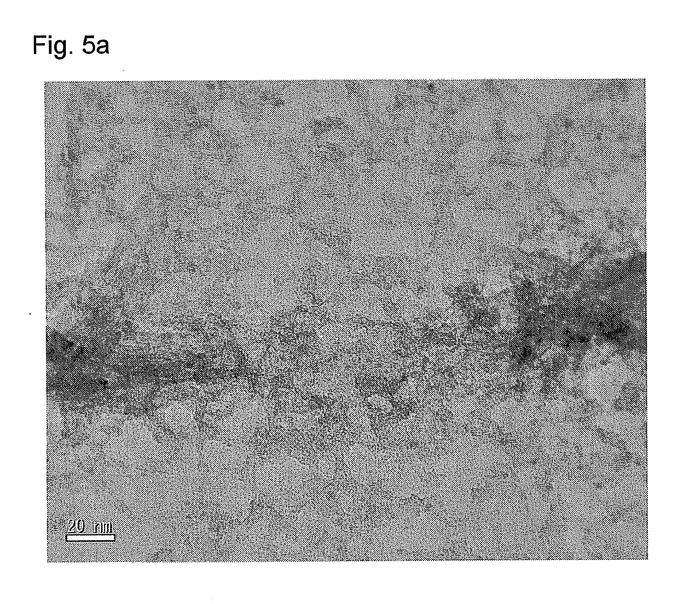

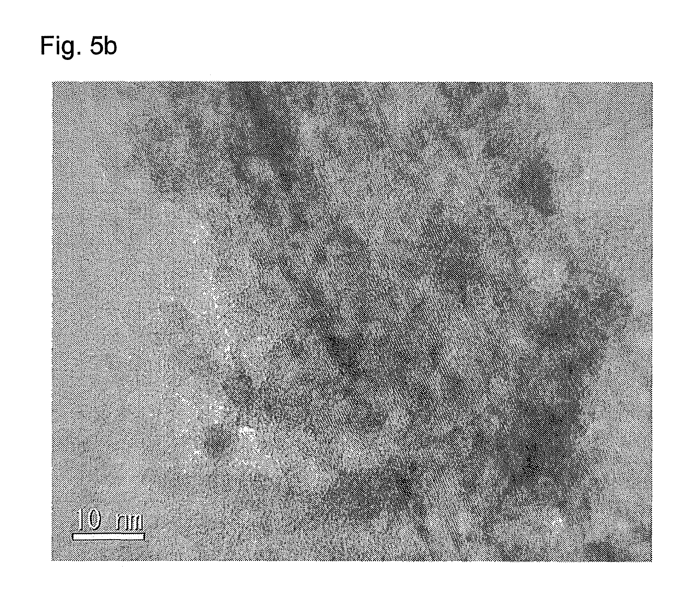

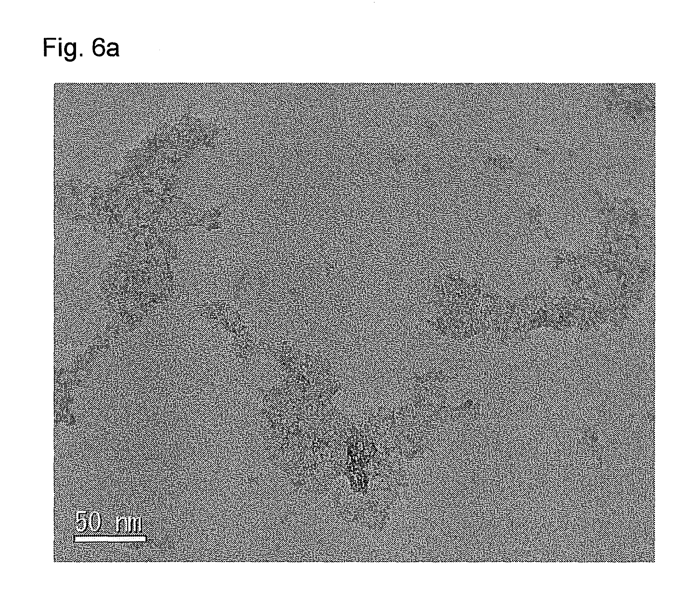

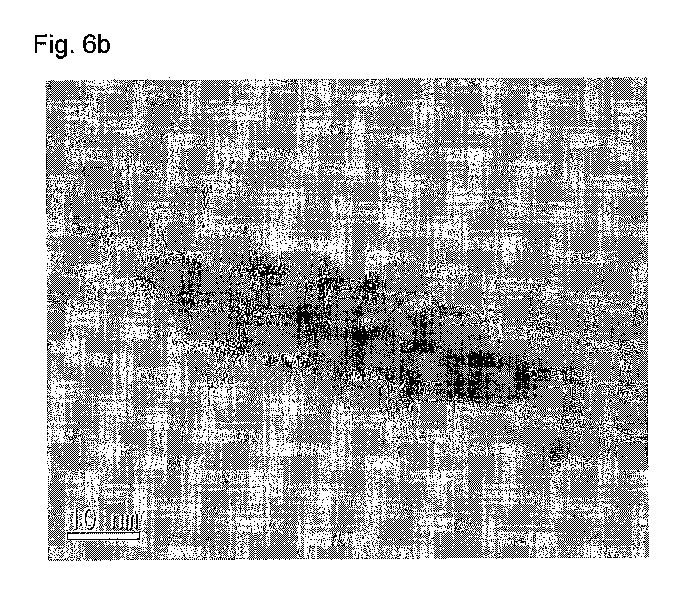

Next, as to the Samples 2a and 2b, electron microscope photographs were taken in a liquid state. As the electron microscope, a transmission electron microscope JEM-2010 (JEOL Ltd.) was used with an accelerating voltage of 200 kV, and the samples were subjected to ultrasonic dispersion and then dropped onto a collodion film-coated mesh to be observed. Results are shown in Figs. 5a, 5b, 6a and 6b. Figs. 5a and 5b show electron microscope photographs of the Sample 2a, Fig. 5a being taken at 500,000-fold magnification, and Fig. 5b being taken at 1500,000-fold magnification. Figs. 6a and 6b show electron microscope photographs of the Sample 2b, Fig. 6a being taken at 300,000-fold magnification, and Fig. 6b being taken at 1500,000-fold magnification.

### Example 3

Aqueous alcohol solutions containing alcohols in water at various contents shown in Table 4 were prepared (10 liter for each sample). The used alcohols were IPA and glycerin (Kishida Chemical Co., Ltd., nominal content 98.5%). With respect to 10 liter of this aqueous alcohol solution, 500 milliliter of titanium tetrachloride (i.e. with respect to 100 parts by volume of the aqueous alcohol solution, 5 parts by volume of titanium tetrachloride) was dropped thereto mechanically and slowly. The dropping was conducted in a draft under a reduced pressure. During titanium tetrachloride was dropped, the aqueous alcohol solution was stirred and mixed by an electric stirrer (rotation speed was set appropriately for each of the samples from 450 to 650 rpm). As to all of the samples, in general, the temperature of the reaction solution was about 38 to 41°C and the reaction time was about 20 to 35 hours.
The appearance for each of the samples thus obtained is also shown in Table 4.

**Table 4**

| Sample | Alcohol | Alcohol content | Appearance |
|---|---|---|---|
| 3a | IPA | 20 vol% | white turbid and precipitating |
| 3b | IPA | 15 vol% | white turbid and precipitating |
| 3c | IPA | 13 vol% | transparent and colorless |
| 3d | IPA | 10 vol% | transparent and colorless |
| 3e | IPA | 7.5 vol% | transparent and colorless |
| 3f | IPA | 5 vol% | transparent and colorless |
| 3g | IPA | 1 vol% | white turbid and precipitating |
| 3h | glycerin | 50 vol% | transparent and colorless |
| 3i | glycerin | 30 vol% | transparent and colorless |
| 3j | glycerin | 1 vol% | transparent and colorless |

All of the samples 3a to 3j are examples of the present invention. Among the Samples 3a to 3g using IPA, the samples 3a, 3b and 3g resulted in a white turbid liquid and precipitation, but the sample 3c to 3f resulted in a transparent and colorless liquid. In contrast, all of the samples 3h to 3j using glycerin resulted in a transparent and colorless liquid. Based on these results, it was confirmed that a transparent and colorless liquid could be obtained by using glycerin at an alcohol content not less than 1% by volume but not more than 50% by volume. Further, it was confirmed that a transparent and colorless liquid could be obtained at an alcohol content more than 1% by volume and less than 15% by volume, irrespective of IPA or glycerin.

A transparent and colorless liquid was obtained in a larger range of the alcohol content in the case using glycerin, in comparison of the case using IPA. As a reason for this, it may be believed that glycerin is a trivalent alcohol and thus has a larger polarity and a larger solubility in (or compatibility with) water than IPA which is a monovalent alcohol.

### Example 4

Aqueous alcohol solutions were variously prepared by mixing an alcohol and water at their amounts shown in Tables 5 to 9 (each of samples in Tables 5 to 8 were 5000 milliliter, each of samples in Tables 9 were 5050 milliliter). In the tables, IPA means isopropyl alcohol, MeOH means methyl alcohol, EtOH means ethyl alcohol, PG means propylene glycol. To this aqueous alcohol solution, 500 milliliter of titanium tetrachloride (i.e. with respect to 100 parts by volume of the aqueous alcohol solution, about 10 parts by volume of titanium tetrachloride) was dropped similarly to Example 3. As a comparative example, on the other hand, only water was used in place of an aqueous alcohol solution, 500 milliliter of titanium tetrachloride was similarly dropped to 5000 milliliter of water. Appearance of the solution was observed (i) during the dropping (thus, during the reaction), (ii) after the dropping until the solution temperature was decreased to a surrounding temperature (ordinary temperature), and (iii) after the solution was left at rest for 3 to 5 hours from the time point at which the solution temperature was decreased to a surrounding temperature (ordinary temperature). Further, the samples were evaluated by their appearances comprehensively (generating precipitation or not, color of the solution, turbidity and so on) with five grades of A⁺ and A to E ("A⁺" is superexcellent, "A" is excellent, "B" is good, "C" is average, "D" is below average). Results of the observation of appearances and the evaluations are also shown in Tables 5 to 10 (as to appearance, the above items (i) to (iii) are shown in the tables as "Reaction", "Passage" and "Rest", respectively).

**Table 5**

| Sample | Mixed amount (ml) | | Alcohol content | Appearance | | | Evaluation |
|---|---|---|---|---|---|---|---|
| | Water | IPA | | Reaction | Passage | Rest | |
| IPA01 | 4950 | 50 | 1 vol% | white turbid | white turbid | transparent, precipitating | B |
| IPA02 | 4900 | 100 | 2 vol% | transparent and colorless | transparent and colorless | slightly precipitating | A |
| IPA05 | 4750 | 250 | 5 vol% | transparent and colorless | transparent and colorless | stable | A⁺ |
| IPA10 | 4500 | 500 | 10 vol% | transparent and colorless | transparent and colorless | stable | A⁺ |
| IPA13 | 4350 | 650 | 13 vol% | transparent and colorless | transparent and colorless | stable | A⁺ |
| IPA15 | 4250 | 750 | 15 vol% | white turbid | white turbid | white turbid, precipitating | B |
| IPA25 | 4000 | 1000 | 25vol% | straw-colored | precipitating | precipitating | C |
| IPA50 | 2500 | 2500 | 50 vol% | straw-colored | precipitating | precipitating | C |

**Table 6**

| Sample | Mixed amount (ml) | | Alcohol content | Appearance | | | Evaluation |
|---|---|---|---|---|---|---|---|
| | Water | MeOH | | Reaction | Passage | Rest | |
| MeOH01 | 4950 | 50 | 1 vol% | white turbid | white turbid | white turbid, precipitating | B |
| MeOH10 | 4500 | 500 | 10 vol% | transparent and colorless | transparent and colorless | stable | A |
| MeOH15 | 4250 | 750 | 15 vol% | white turbid | precipitating | transparent, ting | B |
| MeOH25 | 4000 | 1000 | 25 vol% | white turbid | precipitating | precipitating | C |

**Table 7**

| Sample | Mixed amount (ml) | | Alcohol content | Appearance | | | Evaluation |
|---|---|---|---|---|---|---|---|
| | Water | EtOH | | Reaction | Passage | Rest | |
| EtOH01 | 4950 | 50 | 1 vol% | straw-colored | precipitating | white turbid, precipitating | C |
| EtOH10 | 4500 | 500 | 10 vol% | straw-colored | transparent and straw-colored | slightly yellow | B |
| EtOH15 | 4250 | 750 | 15 vol% | Straw-colored | precipitating | yellow turbid, precipitating | C |
| EtOH25 | 4000 | 1000 | 25 vol% | straw- colored | precipitating | separated, precipitating | C |

In the table, "separated, precipitating" means to separate into a transparent and colorless solution and precipitation.

**Table 8**

| Sample | Mixed amount (ml) | | Alcohol content | Appearance | | | Evaluation |
|---|---|---|---|---|---|---|---|
| | Water | PG | | Reaction | Passage | Rest | |
| PG01 | 4950 | 50 | 1 vol% | transparent and colorless | transparent and colorless | slightly precipitating | B |
| PG05 | 4750 | 250 | 5 vol% | transparent and colorless | transparent and colorless | white turbid, precipitating | C |
| PG10 | 4500 | 500 | 10 vol% | transparent and colorless | transparent and colorless | white turbid, precipitating | C |
| PG15 | 4250 | 750 | 15 vol% | transparent and colorless | transparent and colorless | white turbid, precipitating | C |

**Table 9**

| Sample | Mixed amount (ml) | | | Alcohol content | Appearance | | | Evaluation |
|---|---|---|---|---|---|---|---|---|
| | Water | IPA | PG | | Reaction | Passage | Rest | |
| IPA25 PG | 4000 | 1000 | 50 | 20.8 vol% | transparent and colorless | transparent and colorless | precipitating | C |
| IPA50 PG | 2500 | 2500 | 50 | 50.5 vol% | transparent and colorless | transparent and colorless | precipitating | C |

**Table 10**

| Sample | Water (ml) | Alcohol content | Appearance | | | Evaluation |
|---|---|---|---|---|---|---|
| | | | Reaction | Passage | Rest | |
| Comparative Example | 5000 | - | white colored | white colored | white colored | D |

All of the samples shown in Tables 5 to 9 are examples of the present invention.
When IPA is used, it can be understood with reference to Table 5 that the alcohol content may be less than 25% by volume, and is preferably 1 to 15% by volume, more preferably 2 to 14% by volume, and most preferably 5 to 13% by volume. IPA is advantageous in comparison of other alcohols and exhibits a high stability while time passes.
When MeOH is used, it can be understood with reference to Table 5 that the alcohol content may be less than 25% by volume, and is preferably 1 to 15% by volume, more preferably around 10% by volume (e.g. 8 to 12% by volume). MeOH is readily soluble in water, and is stable even when the alcohol content in an aqueous alcohol solution is low. However, it was found that MeOH had a less effect of, for example, deodorization ability than IPA.
When EtOH is used, it can be understood with reference to Table 7 that the alcohol content may be less than 15% by volume and more than 1% by volume, and is preferably around 10% by volume (e.g. 8 to 12% by volume). In the case of EtOH, a yellow tone of the liquid became strong as time passed.
When PG is used, with reference to Table 8, the alcohol content may be less than 5% by volume, and is preferably around 1% by volume (e.g. 0.01 to 3% by volume). In the case of PG, although the liquid is transparent and colorless during the Reaction and the Passage, it is likely to precipitate as time passes. Also, a similar tendency to this is observed, with reference to Table 9, when a small amount of PG (1% or less by volume) is used in addition to IPA.

On the other hand, the sample shown in Table 10 is a comparative example. When titanium tetrachloride was added to water without alcohol, the solution was white turbid throughout the Reaction, the Passage and the Rest. After additional 48 hours passed, the solution became transparent and colorless, but precipitated.

### Industrial Applicability

A coating agent obtained by the present invention can be applied to an object substance (e.g. fibrous products) and dried, thereby a photocatalyst adheres to the object substance to give functions derived from a photocatalytic effect such as antibacterial activity, bactericidal activity, (decomposing) deodorizing property, antifouling property, and antifogging property.

## Claims

1. A method for producing a coating agent exhibiting a photocatalytic activity, which comprises adding 20 or less parts by volume of titanium tetrachloride with respect to 100 parts by volume of an aqueous alcohol solution containing 0.01 to 50% by volume of an alcohol to obtain a coating agent wherein titanium oxide or a precursor thereof in the form of nanoparticles is dispersed in the aqueous alcohol solution.

2. The method according to claim 1, wherein the aqueous alcohol solution contains 0.01 to 40% by volume of an alcohol.

3. The method according to claim 1 or 2, wherein the alcohol is at least one selected from the group consisting of mono- or poly-alcohols having a carbon number of 1 to 4 and sugar alcohols.

4. The method according to any one of claims 1 to 3, which further comprises after the addition of titanium tetrachloride to the aqueous alcohol solution, adding 3 or less parts by volume of silicate soda with respect to 100 parts by volume of the aqueous alcohol solution.

5. The method according to any one of claims 1 to 4, which further comprises before the addition of titanium tetrachloride to the aqueous alcohol solution, adding 3 or less parts by volume of silicate soda with respect to 100 parts by volume of the aqueous alcohol solution.

6. The method according to claim 1, wherein the coating agent is transparent and colorless.

7. A coating agent exhibiting a photocatalytic activity obtained by the method according to any one of claims 1 to 6.

8. The coating agent according to claim 7, wherein the nanoparticles have an average particle size in a rage from 1 to 100 nm.

9. The coating agent according to claim 8, wherein the nanoparticles have an average particle size in a rage from 1 to 10 nm.

10. The coating agent according to any one of claims 7 to 9, wherein the nanoparticles have a particle size distribution covering a rage from 3 to 15 nm.
